# EUROPEAN PATENT APPLICATION

(11) **EP 2 404 687 A1**
(43) Date of publication of application: **11.01.2012**
(21) Application number: 10748341.4
(22) Date of filing: 04.03.2010
(51) Int. Cl.: B22D 11/16, B22D 46/00, F16B 7/10

(54) **ESCAPE DEVICE AND ESCAPE METHOD**

(30) Priority: 04.03.2009 CN 200910126053
(71) Applicant: Ramon Science and Technology Co., Ltd, Hengyang, Hunan 421001 (CN)
(72) Inventor: TIAN, Zhiheng, Hengyang Hunan 421001 (CN); TIAN, Lu, Hengyang Hunan 421001 (CN); TIAN, Li, Hengyang Hunan 421001 (CN)
(74) Representative: Gunzelmann, Rainer
(86) International application number: PCT/CN2010/070867
(87) International publication number: WO 2010/099751

(57) **Abstract**

An escape device includes a base, a telescopic rod, a transmission device and a controller. The telescopic rod is a double-layer tube which is composed of an inner tube and an outer tube. An end of one tube (102, 202) is connected to an on-site component and the other tube (103, 203) is fixed on the base. The telescopic rod can elongate or shorten and can rotate around an axial line which is parallel or perpendicular to the telescopic rod. An escape method is also disclosed. Using the device and the escape method, the component which is arranged on the end of the telescopic rod can quickly withdrawn from the site, and the telescopic rod and the transmission device can be located at the positions where the on-site work cannot be affected.

## Description

### Field of the invention

The invention relates to continuous casting steel-making technologies, and more particularly, to an escape device and an escape method.

### Background art

Some components installed in a continuous casting on-site components need to escape quickly in exceptional circumstances. For example, an eddy current sensor installed at a mold copper mouth and used to measure liquid level of a molten steel surface in the mold, needs to escape quickly from the mold copper mouth to avoid being burnt by the molten steel when the liquid exceeds an upper limit.

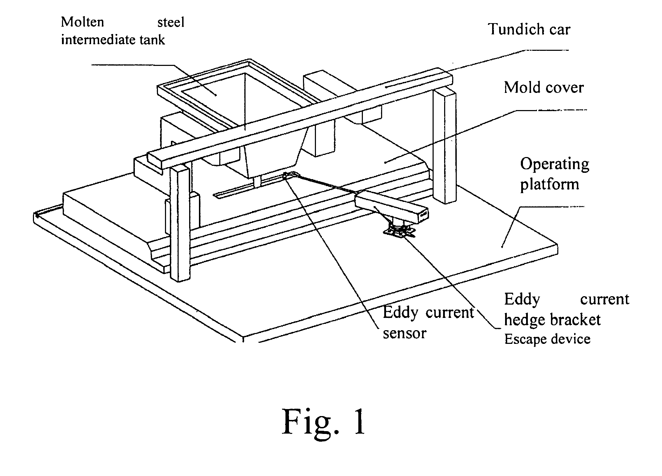

Fig. 1 shows a schematic of an escape device in the related art; an eddy current hedge bracket of Fig. 1 can quickly escape the eddy current sensor from the on-site when the liquid exceeds the upper limit.

In the process of implementing the invention, the inventors found that there is a problem of the escape device including being crassitude (cross section 400mm x 400mm), cumbersome 400KG (kilogram), assembly and disassembly difficult, easy crashing by continuous casting on-site lifting equipment; further, there are only two degrees of freedom of movements including telescopic motion and rotation around an axis of the escape device, thus, the on-site component has a limited scope of escape.

### Summary

It is an object of the invention to provide an escape device and an escape method to overcome the defects presented in the escape device of the related art, such as being crassitude and cumbersome.

In order to solve the above technical problem, one embodiment of the invention provides an escape device which includes a base, a telescopic rod, a transmission device and a controller; the telescopic rod is a double-layer tube, of which an end of one tube is connected to an on-site component and the other tube is fixed disposed on the base; the one tube connected to the on-site component slides along the other tube of the double-layer tube so that the telescopic rod elongates or shortens.

Optionally, one of an outer wall of an inner tube and an inner wall of an outer tube of the telescopic rod defines a chute parallel to an axis of the tubes, and the other one of the inner tube and the outer tube has a bayonet pin embedding into the chute, to achieve that one tube of the telescopic rod slides along other tube of the telescopic rod and rotates with the other tube.

Optionally, the telescopic rod is externally sleeved with a casing pipe.

Optionally, the transmission device is composed of a motor and its accessories.

Optionally, in the above mentioned escape device, the controller controls the motor to adjust telescopic length and rotation angle of the telescopic rod.

Another embodiment of the invention provides an escape method, including: connecting an on-site component to an escape device and locating the on-site component at a working position; wherein the escape device includes a base, a telescopic rod, a transmission device and a controller, the telescopic rod is a double-layer tube, of which an end of one tube is connected to the on-site component and the other tube is fixed disposed on the base; wherein the one tube connected to the on-site component slides along the other tube of the double-layer tube so that the telescopic rod elongates or shortens; and shortening and turning the telescopic rod of the escape device so that the on-site component escapes in the case of the on-site component needs to escape.

Optionally, in the above mentioned escape method, the shortening and turning the telescopic rod of the escape device concretely includes the one tube connected to the on-site component with the other tube rotates around an axis line which is parallel or perpendicular to the telescopic rod.

Optionally, the shortening and turning the telescopic rod of the escape device concretely includes one tube of the telescopic rod slides along other tube of the telescopic rod and rotates with the other tube; wherein one of an outer wall of an inner tube and an inner wall of an outer tube of the telescopic rod defines a chute parallel to an axis of the tubes, and the other one of the inner tube and the outer tube has a bayonet pin embedding into the chute.

Optionally, in the above mentioned escape method, the shortening and turning the telescopic rod of the escape device concretely includes the controller controls the motor to adjust telescopic length and rotation angle of the telescopic rod.

The beneficial effect of the invention is: the telescopic rod is a double-layer tube, of which one tube is axially fixed disposed on the base and the other tube is connected to a continuous casting on-site component and is in sliding engagement along a telescopic axial direction with the one tube which is axially fixed disposed on the base, so that the continuous casting on-site component connected to an end of the one tube which is connected to the continuous casting on-site component can elongate or shorten along the axial direction, thus, the double-layer tube structure make the device of the invention have the beneficial effects such as small volume, light weight and easy installation.

Also, because besides the telescopic motion of the telescopic rod, the rotation of the telescopic rod around its axis and rotary motion around a direction perpendicular to the axis of the telescopic rod is also added, thus, compared to existing technologies, the device and method of the invention causes escape of the continuous casting on-site component more quick. Further, the invention increases a base seat having caster wheel, this makes it easier to move the escape device.

It should be understood, the above general description and the following detailed description are exemplary and explanatory in nature, in order to provide a better understanding of the invention, and is not intended to limit scope of the present invention.

### Brief description of the drawings

The accompanying drawings which constitute a part of the specification are used for further understanding of the invention. The accompanying drawings illustrate some preferred embodiments of the invention and, together with the specification, serve to explain the principles of the invention, in which:
Fig. 1 shows a schematic of an escape device in the related art;
Fig. 2 shows a schematic of an escape device according to one embodiment of the invention;
Fig. 3 is K-direction view of Fig. 2;
Fig. 4 shows a section view of Fig. 2 taken along line A-A;
Fig. 5 shows a schematic of an escape device according to another embodiment of the invention.

### Detailed description of examples

In order to make objects, technical solutions and advantages of the invention clear, the invention is hereinafter further explained in details with reference to embodiments and drawings.

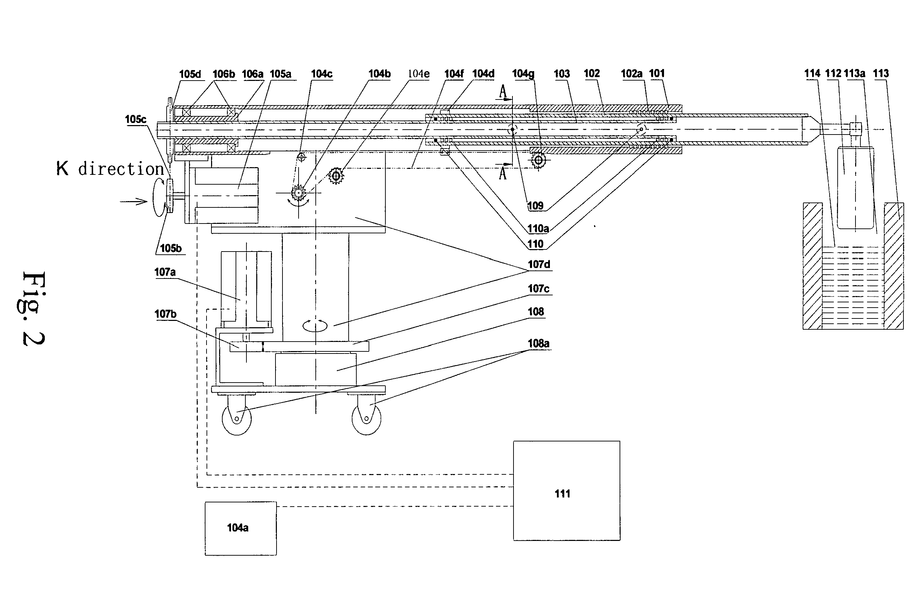

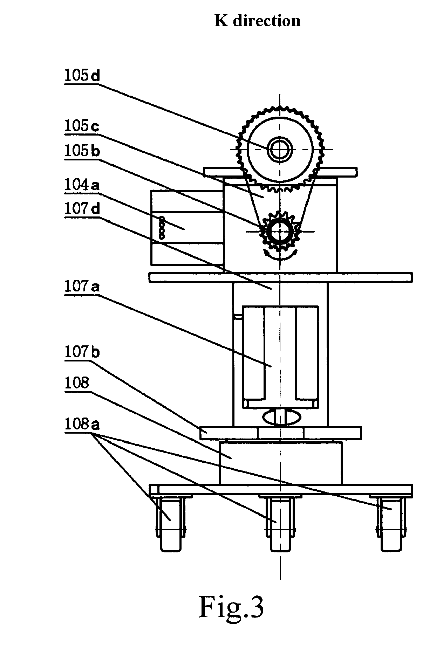

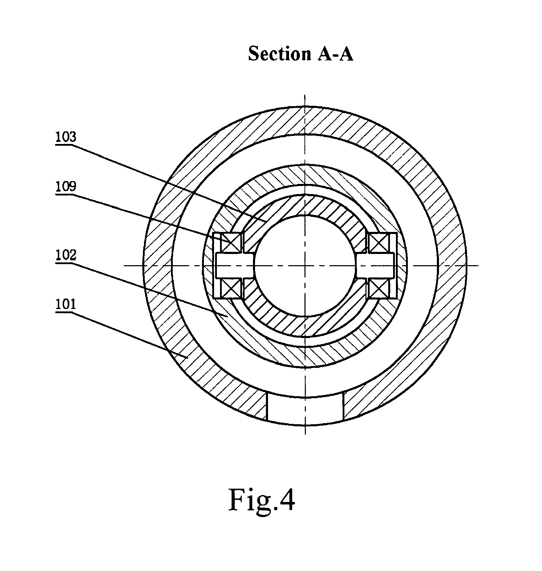

Fig. 2 shows a schematic of an escape device according to one embodiment of the invention; Fig. 3 is a K-direction view of Fig. 2; Fig. 4 shows a section view of Fig. 2 taken along line A-A. The escape device includes a base, a telescopic rod, a transmission device and a controller. The telescopic rod is a double-layer tube, of which the first tube 103 is axially fixed disposed on the base and the second tube 102 is in sliding engagement with the first tube 103 along a telescopic axial direction and an outer end of the second tube 102 is connected to a continuous casting on-site component. The first tube 103 is an inner tube, and the second tube is an outer tube.

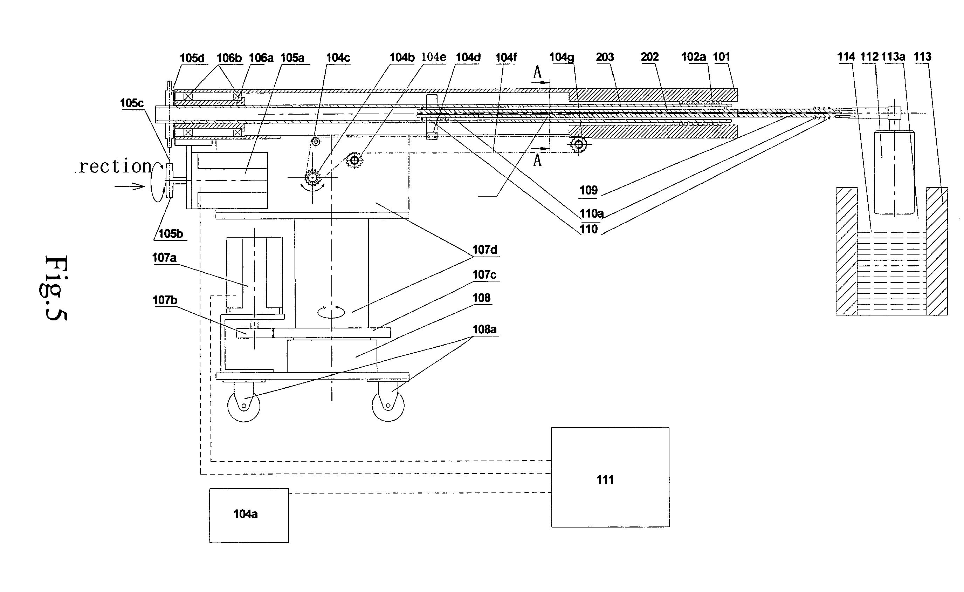

Fig. 5 shows a schematic of an escape device according to another embodiment of the invention. The difference between the escape device of Fig. 5 and the escape device of Figs. 2-4 is in that a first tube 203 thereof is an outer tube and a second tube 202 thereof is an inner tube.

In the escape devices of Figs. 2-5, since each telescopic rod is a double-layer tube of which the first tube is axially fixed disposed on the base and the second tube is in sliding engagement with the first tube along the telescopic axial direction so that the continuous casting on-site component connected to the outer end of the second tube can elongate or shorten along the axial direction, thus, the device may have the beneficial effects such as small volume, light weight and easy installation and can have overcome the defects presented in the escape device of the related art such as being crassitude and cumbersome.

For ease of explanation, the embodiment shown in Figs. 2-4 will be illustrated below as an example, but apparently, the following illustration is not limited to the embodiment shown in Figs. 2-4, and can also be applied to the embodiment shown in Fig. 5.

Preferably, the second tube 102 is connected to the base through the transmission device. The first tube can rotate around its axis. A sliding block is set in one of the first tube 103 and the second tube 102; a sliding chute mating with the sliding block is set in the other one of the first tube 103 and the second tube 102. In this preferred embodiment, the telescopic rod can rotate around its axis so that the continuous casting on-site component connected to the telescopic rod can be driven by the telescopic rod to elongate, shorten or rotate, thus, the casting on-site component can escape far away from the dangerous place.

Referring to Fig. 4, the first tube 103 mates with the second tube through the sliding block and the sliding chute. As an implementation modality, a bayonet pin 109 is set in the first tube 103 and extends into a slot (a spatial location of the second tube 102 occupied by the bayonet 109 in Fig. 4) defined in the second tube 102. Here, the bayonet pin 109 is equivalent to the sliding block and is fixed in an outer wall of the first tube 103; while the slot is equivalent to the sliding chute and is defined in an inner wall of the second tube 102. Thus, when the first tube 103 is driven to rotate, the second tube 102 synchronously rotates. Apparently, so long as it is satisfied that the sliding block mates with the sliding chute, the sliding block can be set in the second tube while the sliding chute can be defined in the first tube 103.

The driving mechanism which drives the first tube 103 to rotate, is composed of a motor 105a, a chain wheel 105b, a chain 105c and a chain wheel 105d. The driving mechanism drives the first tube 103 to rotate around its axis. Since the sliding block and the sliding chute of the first tube and the second tube mate with each other, the second tube is driven to rotate around the axis of the telescopic rod by the bayonet pin 109, thereby achieving a synchronous rotation of the first tube 103 and the second tube 102.

Preferably, a snap ring 104d is fixed connected to an inner end of the second tube 102. The snap ring 104d is fixed connected to a transmission part of the transmission device. Therefore, the second tube can be operated to drive the continuous casting on-site component to quickly escape away from the site by operation of the transmission device.

Specifically, the transmission device which connects the second tube 102 of the telescopic rod to the base, is composed of a motor 104a, a chain wheel 104b, a guide roll 104c, the snap ring 104d, a driven chain wheel 104e, a chain 104f and a tensioning wheel 104g. The snap ring 104d of the transmission device moves with the chain 104f. The snap ring 104d is located in a ring groove (a spatial location of the second tube 102 occupied by the snap ring 104d in Fig. 2). The second tube 102 is driven to elongate or shorten along the axial direction of the first tube 103 through the snap ring 104d. The bayonet pin 109 which is in the first tube 103 and extends into the slot of the second tube 102, play a role of guiding direction. In order to reduce friction, the bayonet pin 109 is composed of bearing. The above described implementing program is simple and easy to operate.

In the embodiment shown in Fig. 5, since the first tube 203 sleeves an outside of the second tube 102, there are slight changes in the structure. In Fig. 5, the first tube 203 of the telescopic rod is an outer tube while the second tube 202 is an inner tube. The first tube 203 defines an aperture, and the snap ring 104d extends through the aperture and is capable of moving along the aperture. This allows the snap ring to be connected to the transmission device.

It should be noted that, the above mentioned transmission device which causes the telescopic rod to elongate or shorten, the driving mechanism which drives the telescopic rod to rotate around its axis are not limited to the above described chain drive, and can also be belt drive. These drives are relatively simple, easy to implement.

Preferably, the base of the escape device includes: an operating platform; and a casing pipe 101 being fixed on the operating platform and sleeving the outside of the telescopic rod. One end of the first tube 103 is supported within the casing pipe 101 by the bearing 106b and the first tube 103 can be driven to rotate. The installation of the casing pipe can better protect and support the telescopic rod.

Preferably, the casing pipe 101, the second tube 102 and the first tube 103 are round tubes, and the three are coaxially distributed from the outer layer to the inner layer. This structure is relatively simple and easy to implement.

Preferably, balls 110a can be disposed between the above mentioned first tube 103 and the second tube 102, and balls are also disposed between the second tube 102 and the casing pipe 101. This can reduce friction.

Preferably, the above mentioned operating platform is a turning operating platform 107d, and its rotation axis is perpendicular to the axis of the first tube 103. The turning operating platform 107d includes a controller 111, a motor 107a, a gear 107b and a gear 107c. The adaptation of an automatically controlled turning operating platform makes the operation more flexible.

Preferably, the base of the above mentioned escape device further includes a base seat 108 having two caster wheels 108a. The operating platform 107d is disposed at the base seat 108. This makes it easier to move the escape device. When necessary, one person can push the escape device to a long-term storage by means of two caster wheels 108a of the escape device.

The rotary power of the motor 107 is transferred to the turning operating platform 107d through the gears 107b, 107c, so that the turning operating platform 107d turns around an axis which is perpendicular to the first tube 103. Balls are disposed between the turning operating platform 107d and the base seat 108.

The controller 111 controls the motors 104a, 105a and 107a, to adjust telescopic length and the rotation angle of the telescopic rod of the escape device. The controller 111 can control three movements of the telescopic rod, that is, telescopic motion, rotary motion around the axis of the telescopic rod, and rotary motion around the axis perpendicular to the telescopic rod, to proceed simultaneously. Two sealing rings 110 are set between the second tube 102 and the first tube 103. One of the sealing rings 110 at an end close to a sensor 112 is located in the ring groove of the first tube 103; the other one of the sealing rings 110 at an end away from the sensor 112 is located in the ring groove of the second tube 102. A casing pipe 106a and a bearing 106 are disposed between the first tube 103 and the casing pipe 101 at an end thereof close to the chain wheel 105d, and play a role of guiding direction and reducing friction for the first tube. The balls 102a are disposed between an end of the casing pipe 101 away from the chain wheel 105d and the second tube 102, and play a role of location, guiding direction and reducing friction for the second tube 102 and the first tube 103, thereby achieving that one end of the first tube 103 is supported within the casing pipe 101 by the bearing 106b and another end of the first tube 103 is supported within the casing pipe 101 by the second tube 102. The motor 105a, the guide roll 104c and the tensioning wheel 104g are on the casing pipe 101. The casing pipe 101, the chain wheel 104b and the chain wheel 104e are on the turning operating platform 107d. The motor 107a is on the base 108.

The escape device of the invention shown in Figs. 2-4 takes an eddy current sensor as an example. As shown in Fig. 2, the eddy current sensor 112 is installed at a mold copper mouth 113a, and is used to measure the height of a molten steel surface 114 in the mold 113. The eddy current sensor 112 is connected to the telescopic tube of the telescopic rod of the device of the invention so as to move with the telescopic motion of the telescopic rod towards or away from the mold copper mouth 113a. The signal cable of the eddy current sensor 112 is connected to the eddy current sensor 112 through a soft tube (not shown), the first tube 103 and the second tube 102. Cooling air for the eddy current sensor 112 is supplied to the eddy current sensor 112 through the soft tube, the first tube 103 and the second tube 102. But it can be clearly seen, the invention is not limited to the conditions of the eddy current sensor shown in Figs. 2-4, and can be suitable for escape of any continuous casting on-site component. It should be noted, compared with the first tube 103 being supported within the casing pipe 101, the casing pipe 101 can be omitted and a supporting seat can be fixed on the base, then one end of the first tube 103 is supported on the supporting seat by a bearing, thereby also achieving that the first tube 103 is axially fixed connected relative to the base.

It is noteworthy that, the above mainly uses the embodiment shown in Figs. 2-4 as an example for explanation , but apparently, the above technical solutions are not limited to the embodiment shown in Figs. 2-4, and can also be applied to the embodiment shown in Fig. 5.

Compared to existing technologies, the double-layer tube structure of the telescopic rod of the invention make the escape device have the beneficial effects such as small volume, light weight and easy installation. Further, the telescopic rod can elongate or shorten and can rotate around an axial line which is parallel or perpendicular to the telescopic rod so that the component which is arranged on the end of the telescopic rod can be quickly withdrawn from the site and the telescopic rod and the transmission device can be located at the positions where the on-site work cannot be affected.

Another embodiment of the invention further provides an escape method, the method includes following steps: connecting an on-site component to the telescopic rod of the escape device of the above mentioned embodiment and locating the on-site component at a working position; and shortening and turning the telescopic rod of the escape device so that the on-site component escapes in the case of the on-site component needs to escape.

The step of shortening and turning the telescopic rod of the escape device includes: the one tube connected to the on-site component with the other tube rotates around an axis line which is parallel or perpendicular to the telescopic rod.

Preferably, the step of shortening and turning the telescopic rod of the escape device can also include: one tube of the telescopic rod slides along other tube of the telescopic rod and rotates with the other tube; one of an outer wall of an inner tube and an inner wall of an outer tube of the telescopic rod defines a chute parallel to an axis of the tubes, and the other one of the inner tube and the outer tube has a bayonet pin embedding into the chute.

Preferably, the step of shortening and turning the telescopic rod of the escape device can also include: the controller controls the motor to adjust telescopic length and rotation angle of the telescopic rod.

In the escape method of the embodiment of the invention, since besides the telescopic motion of the telescopic rod and the rotation of the telescopic rod around its axis, rotary motion around a direction perpendicular to the axis of the telescopic rod is also added, causing escape of the continuous casting on-site component quick.

The foregoing are only preferred embodiments of the invention and are not for use in limiting the protection scope thereof. All modifications, equivalent replacements or improvements in accordance with the spirit and principles of the invention shall be included in the protection scope of the invention.

## Claims

1. An escape device, which is **characterized by** comprising a base, a telescopic rod, a transmission device and a controller;
wherein the telescopic rod is a double-layer tube, of which an end of one tube is connected to a on-site component and the other tube is fixed disposed on the base; wherein the one tube connected to the on-site component slides along the other tube of the double-layer tube so that the telescopic rod elongates or shortens.

2. The escape device of claim 1, wherein the one tube connected to the on-site component with the other tube rotates around an axis line which is parallel or perpendicular to the telescopic rod.

3. The escape device of claim 1 or 2, wherein one of an outer wall of an inner tube and an inner wall of an outer tube of the telescopic rod defines a chute parallel to an axis of the tubes, and the other one of the inner tube and the outer tube has a bayonet pin embedding into the chute, to achieve that one tube of the telescopic rod slides along other tube of the telescopic rod and rotates with the other tube.

4. The escape device of claim 1 or 2, wherein the telescopic rod is externally sleeved with a casing pipe.

5. The escape device of claim 1 or 2, wherein the transmission device is composed of a motor and its accessories.

6. The escape device of claim 5, wherein the controller controls the motor to adjust telescopic length and rotation angle of the telescopic rod.

7. A escape method which is **characterized by** comprising:
connecting a on-site component to an escape device and locating the on-site component at a working position; wherein the escape device comprises a base, a telescopic rod, a transmission device and a controller, the telescopic rod is a double-layer tube, of which an end of one tube is connected to the on-site component and the other tube is fixed disposed on the base; wherein the one tube connected to the on-site component slides along the other tube of the double-layer tube so that the telescopic rod elongates or shortens; and
shortening and turning the telescopic rod of the escape device so that the on-site component escapes in the case of the on-site component needs to escape.

8. The escape method of claim 7, wherein the shortening and turning the telescopic rod of the escape device concretely comprises the one tube connected to the on-site component with the other tube rotates around an axis line which is parallel or perpendicular to the telescopic rod.

9. The escape method of claim 7 or 8, wherein the shortening and turning the telescopic rod of the escape device concretely comprises one tube of the telescopic rod slides along other tube of the telescopic rod and rotates with the other tube; wherein one of an outer wall of an inner tube and an inner wall of an outer tube of the telescopic rod defines a chute parallel to an axis of the tubes, and the other one of the inner tube and the outer tube has a bayonet pin embedding into the chute.

10. The escape method of claim 7, wherein the shortening and turning the telescopic rod of the escape device concretely comprises the controller controls the motor to adjust telescopic length and rotation angle of the telescopic rod.
